# EUROPÄISCHE PATENTSCHRIFT

(11) **EP 0 447 623 B1**
(45) Veröffentlichungstag und Bekanntmachung des Hinweises auf die Patenterteilung: **05.04.1995**
(21) Anmeldenummer: 90122035.0
(22) Anmeldetag: 17.11.1990
(51) Int. Cl.: G05D 7/06, F02M 25/08

(54) **Elektromagnetisches Ventil**
Electromagnetic valve
Soupape électromagnétique

(30) Priorität: 15.03.1990 DE 4008266
(43) Veröffentlichungstag der Anmeldung: 25.09.1991
(73) Patentinhaber: Firma Carl Freudenberg, 69469 Weinheim (DE)
(72) Erfinder: Tinz, Reinhard, W-6101 Gross-Biberau (DE); Heinemann, Joachim, W-6940 Weinheim (DE)

(56) Entgegenhaltungen:
- DE-C- 3 802 664
- FR-A- 2 482 241
- US-A- 4 153 025

## Beschreibung

Die Erfindung betrifft ein elektromagnetisches Ventil, bei dem zwischen einer Ein- und einer Auslaßöffnung ein Ventilsitz vorgesehen ist sowie ein Schließglied, das den Ventilsitz im spannungsfreien Zustand durch die Kraft einer Feder dichtend berührt, wobei zu dem Ventilsitz ein Hilfsventilsitz parallel geschaltet ist, wobei an den Hilfsventilsitz im spannungsfreien Zustand ein Hilfsschließglied durch die Kraft einer Hilfsfeder dichtend angepreßt ist, wobei der Hilfsventilsitz einen geringeren Öffnungsquerschnitt aufweist als der Ventilsitz und wobei das Schließglied und das Hilfsschließglied gemeinsam in Offenstellung bringbar sind.

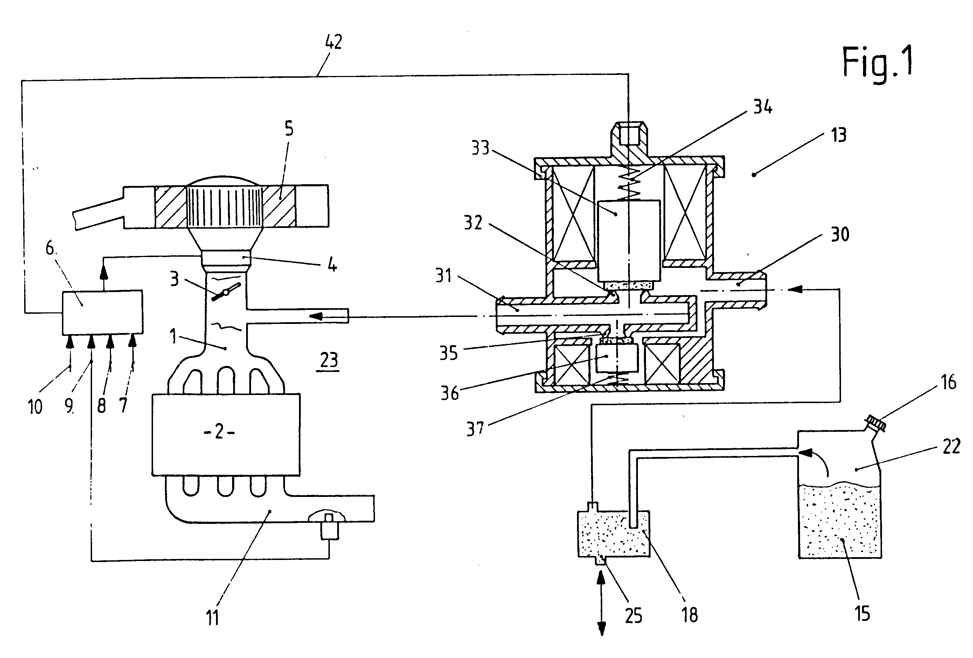

Ein solches Ventil ist aus der FR-A-2 482 241, Fig. 1, bekannt. Die Schließglieder, die einander parallel in einem gemeinsamen Gehäuse zugeordnet sind, weisen jeweils voneinander abweichende Abmessungen auf.

Ein weiteres Ventil ist aus der DE-PS 38 02 664 bekannt. Es gelangt bei der Einspeisung flüchtiger Kraftstoffbestandteile aus dem Kraftstoffbehälter in das Ansaugrohr einer Brennkraftmaschine zur Anwendung, wobei eine getaktete Betätigung vorgesehen ist, um eine feinfühlige Anpassung des Volumens der durchgesetzten Kraftstoffdämpfe an das Absorptionsvermögen der Brennkraftmaschine zu gewährleisten.

Der Erfindung liegt die Aufgabe zugrunde, ein elektromagnetisches Ventil der eingangs genannten Art zu zeigen, das ähnlich einfach ansteuerbar ist wie die vorbekannte Ausführung und das dennoch eine vergleichsweise vergrößerte Öffnungsgeschwindigkeit aufweist. Unter Vermeidung aufwendiger, elektrischer Steuerungen soll hierdurch erreicht werden, daß sich das Volumen der je Zeiteinheit durchgesetzten Menge des strömungsfähigen Mittels noch feinfühliger steuern läßt als bisher.

Zur Lösung dieser Aufgabenstellung ist es erfindungsgemäß bei einem elektromagnetischen Ventil der eingangs genannten Art vorgesehen, daß das Schließglied und das Hilfsschließglied durch parallel geschaltete Magnetspulen derart betätigbar sind, daß das die elektrische Ansteuerungen bewirkende Signal in der Verbindungsleitung bereits vor dem Ansprechen des Schließglieds abgeklungen ist, so daß nur das Hilfsschließglied in Offenstellung bringbar ist und daß die Durchlässigkeit durch die Auslaßöffnung stufenlos veränderbar ist. Der Ventilsitz, das Schließglied und die Feder bilden somit ein Hauptventil, zu dem ein Hilfsventil parallel geschaltet ist, welches den Hilfsventilsitz, das Hilfsschließglied und die Hilfsfeder umfaßt. Die relativ beweglichen Trägheitsmassen des Schließgliedes und des Hilfsschließglieds sind jeweils so gering bemessen wie irgend möglich und die Feder und die Hilfsfeder so weich ausgelegt, daß eine dichtende Anpressung des Schließglieds bzw. des Hilfsschließglieds im spannungsfreien Zustand der zugehörigen Magnetspule gerade noch gewährleistet ist. Als Unterscheidungsmerkmal bleibt dadurch vor allem erhalten, daß die beweglichen Teile des Hilfsventils von geringerer Trägheitsmasse sind als diejenigen des Hauptventils und daß das Schließglied des Hilfsventils vergleichsweise geringer statisch vorbelastet ist. Bei einer gemeinsamen Ansteuerung der Magnetspulen des Hauptventils und des Hilfsventils gelangt das Hilfsventil dadurch zu einem früheren Zeitpunkt in Offenstellung, was das Hauptventil hydraulisch entlastet und die Öffnungsgeschwindigkeit von dessen Schließglied vergrößert. Die Taktfrequenz, mit der das erfindungsgemäße Ventil ansteuerbar ist, liegt dadurch deutlich über derjenigen der vorbekannten Ausführung. Die je Zeiteinheit durchgesetzten Mengen eines fließfähigen Stoffes lassen sich dadurch wesentlich feinfühliger steuern als bisher.

Die Masse des je Zeiteinheit durchgesetzten Volumenstroms läßt sich bei einer etakteten Ansteuerung bedarfsweise verändern durch eine Modifizierung der Zeitdauer, in der das Haupt- bzw. das Hilfsventil pro Ansteuerung geöffnet ist sowie durch ein Veränderung der je Zeiteinheit erfolgten Ansteuerungen, d. h. der Taktfrequenz. Insbesondere die Zeitdauer der einzelnen Ansteuerung ist für die erfindungsgemäße Ausführung von Bedeutung. Sie schließt bei sehr hohen Frequenzen den Fall mit in sich ein, daß das die elektrische Ansteuerung bewirkende Signal in der Verbindungsleitung bereits vor dem Ansprechen des Hauptventils abgeklungen ist so daß nur das Hilfsventil während einer besonders kurzen Zeitspanne in Offenstellung gelangt. Das Volumen der durchgesetzten Kraftstoffdämpfe ist dementsprechend ganz besonders gering. Eine solche Betriebssituation steht dem anderen Extremfall gegenüber, in welchem das Hauptventil und das Hilfsventil während einer besonders langen Zeitspanne überwiegend parallel zueinander in Offenstellung verharren. In diesem Falle ist das Volumen der je Zeiteinheit durchgesetzten Kraftstoffdämpfe ganz besonders groß. Die Durchlässigkeit des erfindungsgemäßen Ventils läßt sich zwischen beiden Extremfällen stufenlos verändern, ohne daß es hierzu eines besonderen, elektrischem Steuerungsaufwand bedarf. Bei einem besonders guten Betriebsverhalten lassen sich dadurch in den unterschiedlichen Betriebszuständen der Brennkraftmaschine ausgezeichnete Abgaswerte gewährleisten.

Eine besonders große Ansprechgeschwindigkeit wird erhalten, wenn das Verhältnis aus den von dem Ventilsitz und von dem Hilfsventilsitz umschlossenen Querschnitten 2 bis 100 vorzugsweise 5 bis 50, beträgt.

Als besonders vorteilhaft hat es sich erwiesen, wenn das erfindungsgemäß vorgeschlagene, elektromagnetische Ventil Verwendung findet bei der getakteten Einspeisung flüchtiger Kraftstoffbestandteile aus einem Kraftstoffbehälter in das Ansaugrohr einer Brennkraftmaschine. Die hohe Taktfrequenz, mit der das erfindungsgemäße Ventil ansteuerbar ist, ermöglicht hier eine besonders feinfühlige Anpassung des Volumens der je Zeiteinheit in das Ansaugrohr eingespeisten Kraftstoffdämpfe an das Absorptionsvermögen der Brennkraftmaschine in ihren verschiedenen Betriebszuständen. Neben einer Vermeidung von Betriebsstörungen der Brennkraftmaschine lassen sich hierdurch bei voneinander abweichenden Betriebszuständen besonders günstige Abgaswerte erhalten.

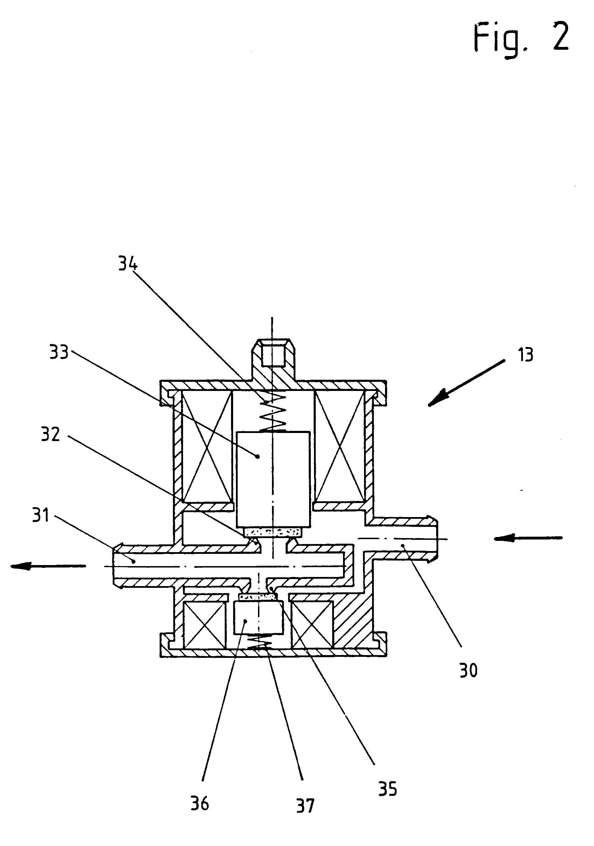

Der Gegenstand der vorliegenden Erfindung wird nachfolgend anhand der Zeichnung weiter verdeutlicht. Diese zeigt in Fig. 1 die einzelnen bei der Einspeisung flüchtiger Kraftstoffbestandteile aus dem Kraftstoffbehälter in das Ansaugrohr einer Brennkraftmaschine zur Anwendung gelangenden Komponenten in Verbindung miteinander und teilweise in schematischer Darstellung, in Fig. 2 eine alternative Ausführung eines darin verwendbaren Ventils.

Die im linken Teil der Darstellung nach Fig. 1 wiedergegebene Brennkraftmaschine ist mit 2 bezeichnet und durch das eine Drosselklappe 3 enthaltende Ansaugrohr 1 mit einem Luftfilter 5 verbunden sowie durch den Auspuffkrümmer 11 mit dem nicht dargestellten Auspuff.

In dem Ansaugrohr 1 ist oberhalb der Drosselklappe 3 die Kraftstoffversorgungseinrichtung 4 vorgesehen, in welcher das durch das Luftfilter 5 zugeführte Frischluftvolumen im erforderlichen Maße mit Kraftstoff versetzt wird. Die dazu erforderlichen Signale werden durch das Steuergerät 6 bereitgestellt, beispielsweise auf der Grundlage der Abgastemperatur und -zusammensetzung, der Betriebsdrehzahl der Brennkraftmaschine und der Umgebungstemperatur. Die entsprechenden Eingangssignale, welche unter Verwendung entsprechender Sensoren erfaßt werden, wurden durch die Pfeile 7, 8, 9, 10 angedeutet. Sie können bei Bedarf in erwünschtem Maße ergänzt werden.

Im rechten Teil der Darstellung ist der zugehörige Kraftstoffbehälter wiedergegeben. Er ist nur teilweise mit Kraftstoff 15 gefüllt und weist oberhalb des Kraftstoffspiegels einen Freiraum 22 auf. Der Verschluß 16 des Kraftstoffbehälters schließt denselben gegenüber der Umgebung hermetisch ab.

Der Freiraum 22 des Kraftstoffbehälters ist durch die Entlüftungsleitung 25 mit der Atmosphäre 13 verbunden. Die Entlüftungsleitung 25 enthält die Speicherkammer 18, welche mit einem Granulat aus Aktivkohle gefüllt ist. Die Dimensionierung der Speicherkammer 18 ist dabei so vorgenommen, daß unter normalen Betriebsbedingungen flüchtige Kraftstoffbestandteile die Mündung der Entlüftungsleitung 25 nicht passieren können.

Auf der der Mündung der Entlüftungsleitung 25 gegenüberliegenden Seite der Speicherkammer 18 ist die Leitung 20 angeschlossen, welche die Speicherkammer 18 mit dem Ansaugrohr 1 der Brennkraftmaschine 2 verbindet. In der Leitung 20 ist das elektromagnetische Ventil 13 angeordnet, welches bei Außerbetriebsetzung der Brennkraftmaschine 2 geschlossen und durch das Steuergerät 6 betätigbar ist, welches durch eine elektrische Verbindungsleitung 42 an die Magnetspulen 38, 39 des Hauptventils 40 und des Hilfsventils 41 angeschlossen ist.

Das Hauptventil besteht im wesentlichen aus dem Ventilsitz 32, dem Schließglied 33 und der Feder 34, das Hilfsventil 41 im wesentlichen aus dem Hilfsventilsitz 35, dem Hilfsschließglied 36 und der Hilfsfeder 37.

Das Verhältnis aus der von dem Ventilsitz 32 umschlossenenen Querschnittsfläche und der von dem Hilfsventilsitz 35 umschlossenen Querschnittsfläche beträgt etwa 40 und die Feder 34 und die Hilfsfeder 37 sind jeweils so weich ausgelegt, daß eine dichtende Anpressung des Schließgliedes 33 bzw. des Hilfsschließgliedes 36 im spannungsfreien Zustand an den Ventilsitz 32 bzw. den Hilfsventilsitz 35 gerade noch gewährleistet ist. Hierdurch sowie durch die vergleichsweise geringere Trägheitsmasse des Hilfsschließgliedes 36 ergibt sich bei einer gemeinsamen Ansteuerung beider Magnetspulen 38, 39 eine frühere Öffnung des Hilfsventils 41 als des Hauptventils 40. Das Hauptventil 40 wird dadurch hydraulisch entlastet, was seine Öffnungsgeschwindigkeit vergrößert und es gestattet, den Durchtrittsquerschnitt seines Ventilsitzes zu vergrößern. Der je Zeiteinheit durchsetzbare Volumenstrom vergrößert sich entsprechend.

Bei der in Fig. 2 gezeigten Ausführung des Ventils 13 sind das Haupt- und das Hilfsventil einander in geometrisch veränderter Weise zugeordnet. Die Funktion entspricht der vorstehend beschriebenen.

Die Masse des je Zeiteinheit durchgesetzten Volumenstromes läßt sich bei einer getakteten Ansteuerung bedarfsweise verändern durch eine Modifizierung der Zeitdauer, in der das Haupt- bzw. das Hilfsventil 40, 41 pro Ansteuerung geöffnet ist sowie durch eine Veränderung der je Zeiteinheit erfolgenden Ansteuerungen, d.h. der Taktfrequenz. Insbesondere die Zeitdauer der einzelnen Ansteuerung ist für die erfindungsgemäße Ausführung von Bedeutung. Sie schließt bei sehr hohen Frequenzen den Fall mit in sich ein, daß das die elektrische Ansteuerung bewirkende Signal in der Verbindungsleitung 42 bereits vor dem Ansprechen des Hauptventils 40 abgeklungen ist, so daß nur das Hilfsventil 41 während einer besonders kurzen Zeitspanne in Offenstellung gelangt. Das Volumen der durchgesetzten Kraftstoffdämpfe ist dementsprechend ganz besonders gering. Eine solche Betriebssituation steht dem anderen Extremfall gegenüber, in welchem das Hauptventil 40 und das Hilfsventil 41 während einer besonders langen Zeitspanne überwiegend parallel zueinander in Offenstellung verharren. In diesem Falle ist das Volumen der je Zeiteinheit durchgesetzten Kraftstoffdämpfe ganz besonders groß.

Die Durchlässigkeit des erfindungsgemäßen Ventils läßt sich zwischen beiden Extremfällen stufenlos verändern, ohne daß es hierzu eines besonderen, elektrischen Steuerungsaufwandes bedarf. Neben einem besonders guten Betriebsverhalten lassen sich dadurch in den unterschiedlichen Betriebszuständen der Brennkraftmaschine 2 ausgezeichnete Abgaswerte gewährleisten.

## Patentansprüche

1. Elektromagnetisches Ventil, bei dem zwischen einer Ein - (30) und einer Auslaßöffnung (31) ein Ventilsitz (32) vorgesehen ist sowie ein Schließglied (33), das den Ventilsitz (32) im spannungsfreien Zustand durch die Kraft einer Feder (34) dichtend berührt, wobei zu dem Ventilsitz (32) ein Hilfsventilsitz (35) parallel geschaltet ist, wobei an den Hilfsventilsitz (35) im spannungsfreien Zustand ein Hilfsschließglied (36) durch die Kraft einer Hilfsfeder (37) dichtend angepreßt ist, wobei der Hilfsventilsitz (35) einen geringeren Öffnungsquerschnitt aufweist als der Ventilsitz (32) und wobei das Schließglied (33) und das Hilfsschließglied (36) gemeinsam in Offenstellung bringbar sind, dadurch gekennzeichnet, daß das Schließglied (33) und das Hilfsschließglied (36) durch parallel geschaltete Magnetspulen (38, 39) derart betätigbar sind und das die elektrische Ansteuerung bewirkende Signal in der Verbindungsleitung (42) bereits vor dem Ansprechen des Schließglieds (33) abgeklungen ist, so daß bei sehr hohen Frequenzen nur das Hilfsschließglied (36) in Offenstellung bringbar ist und daß die Durchlässigkeit durch die Auslaßöffnung (31) stufenlos veränderbar ist.

2. Ventil nach Anspruch 1, dadurch gekennzeichnet, daß das Hilfsschließglied (36) eine geringere Trägheitsmasse aufweist als das Schließglied (33).

3. Ventilsitz nach Anspruch 1 bis 2, dadurch gekennzeichnet, daß das Verhältnis aus den von dem Ventilsitz (32) und dem Hilfsventilsitz (35) umschlossenen Querschnittsflächen 2 bis 100 beträgt.

4. Ventilsitz nach Anspruch 1 bis 2, dadurch gekennzeichnet, daß das Verhältnis aus den von dem Ventilsitz (32) und dem Hilfsventilsitz (35) umschlossenen Querschnittsflächen 5 bis 50 beträgt.

5. Verwendung des Magnetventils nach einem der Ansprüche 1 bis 4, bei der getakteten Einspeisung flüchtiger Kraftstoffbestandteile aus dem Kraftstoffbehälter in das Ansaugrohr (1) einer Brennkraftmaschine (2).

## Claims

1. An electromagnetic valve in which is provided a valve seat (32), between an inlet opening (30) and an outlet opening (31), and a closing element (33) which is in sealing contact with the valve seat (32) in the voltage-free condition due to the force of a spring (34), an auxiliary valve seat (35) being connected in parallel with the valve seat (32), an auxiliary closing element (36) being pressed by the force of an auxiliary spring (37) so as to seal onto the auxiliary valve seat (35) in the voltage-free condition, the auxiliary valve seat (35) having a smaller opening cross-section than the valve seat (32) and it being possible to bring the closing element (33) and the auxiliary closing element (36) jointly into the open position, characterized in that the closing element (33) and the auxiliary closing element (36) can be actuated by parallel-connected magnet coils (38, 39) in such a way and the signal in the connecting line (42) which effects the electrical activation has already decayed before the response of the closing element (33) so that at very high frequencies it is only possible to bring the auxiliary closing element (36) into the open position and in that the flow capacity through the outlet opening (31) can be step-lessly varied.

2. A valve according to claim 1, characterized in that the auxiliary closing element (36) has a lower inertial mass than the closing element (33).

3. A valve seat according to claim 1 or 2, characterized in that the ratio between the cross-sectional areas enclosed by the valve seat (32) and the auxiliary valve seat (35) is between 2 and 100.

4. A valve seat according to claim 1 or 2, characterized in that the ratio between the cross-sectional areas enclosed by the valve seat (32) and the auxiliary valve seat (35) is between 5 and 50.

5. Use of the magnetic valve according to any one of claims 1 to 4 in the pulsed feed of volatile fuel constituents from the fuel tank into the induction pipe (1) of an internal combustion engine (2).

## Revendications

1. Soupape électromagnétique dans laquelle il est prévu un siège de soupape (32), entre une ouverture d'entrée (30) et une ouverture de sortie (31), ainsi qu'un élément de fermeture (33) qui, à l'état non-contraint, est en contact étanche avec le siège de soupape (32) sous l'influence de la force d'un ressort (34), un siège de soupape auxiliaire (35) étant monté parallèlement au siège de soupape (32), un élément auxiliaire de fermeture (36) étant, à l'état non-contraint, pressé d'une manière étanche contre le siège de soupape auxiliaire (35) sous l'influence de la force d'un ressort auxiliaire (37), le siège de soupape auxiliaire (35) ayant une section d'ouverture plus petite que le siège de soupape (32) et l'élément de fermeture (33) et l'élément auxiliaire de fermeture (36) pouvant être mis en position ouverte en même temps, cette soupape étant caractérisée en ce que l'élément de fermeture (33) et l'élément auxiliaire de fermeture (36) peuvent être commandés par des bobines d'excitation (38, 39) montées en parallèle et que le signal induisant les excitations électriques s'est déjà évanoui dans le circuit de connexion (42) avant même la réponse de l'élément de fermeture (33), de sorte que, pour des fréquences très élevées, seul l'élément auxiliaire de fermeture (36) peut être mis en position ouverte et que la perméabilité à travers l'ouverture de sortie (31) peut être modifiée de manière progressive.

2. Soupape selon la revendication 1, caractérisée en ce que l'élément auxiliaire de fermeture (36) a une masse d'inertie plus petite que l'élément de fermeture (33).

3. Soupape selon les revendications 1 à 2, caractérisée en ce que le rapport des surfaces des sections du siège de soupape (32) et du siège de soupape auxiliaire (35) est compris entre 2 et 100.

4. Soupape selon les revendications 1 à 2, caractérisée en ce que le rapport des surfaces des sections du siège de soupape (32) et du siège de soupape auxiliaire (35) est compris entre 5 et 50.

5. Utilisation de la soupape électromagnétique selon l'une des revendications 1 à 4 pour l'alimentation synchronisée de composants volatiles de carburant provenant du réservoir d'essence dans le tuyau d'admission (1) d'un moteur (2) à combustion interne.
